# EUROPEAN PATENT SPECIFICATION

(11) **EP 3 192 635 B1**
(45) Date of publication and mention of the grant of the patent: **22.12.2021**
(21) Application number: 14901685.9
(22) Date of filing: 09.09.2014
(51) Int. Cl.: B29C 37/02, B08B 3/12, B29C 35/02, B06B 1/02

(54) **ULTRASONIC BURR REMOVAL DEVICE**
ULTRASCHALL-GRATBESEITIGUNGSVORRICHTUNG
DISPOSITIF ULTRASONORE DE SUPPRESSION DE BAVURES

(43) Date of publication of application: 19.07.2017
(73) Proprietor: Blue Star R&D Co., Ltd., Sagamihara-shi, Kanagawa 252-0241 (JP)
(72) Inventor: SHIBANO, Yoshihide, Sagamihara-shi Kanagawa 252-0241 (JP)
(74) Representative: Kuhnen & Wacker Patent- und Rechtsanwaltsbüro PartG mbB
(86) International application number: PCT/JP2014/073782
(87) International publication number: WO 2016/038679

(56) References cited:
- EP-A2- 0 612 570
- JP-A- H0 671 239
- JP-A- H0 699 149
- JP-A- H02 233 190
- JP-A- H08 267 029
- JP-A- 2000 288 307
- JP-A- 2000 288 307
- JP-A- 2004 216 254
- JP-A- 2007 098 817
- JP-A- 2010 194 485
- JP-A- 2010 194 485
- JP-A- 2014 180 757
- YOSHIHIDE SHIBANO: 'Features of Ultrasonic Micro-Flash Removal and Cleaning Equipment' PLASTICS AGE vol. 59, no. 719, 01 July 2013, pages 66 - 69, XP008184174

## Description

### Technical Field

The present invention relates to a technology of removing, through use of ultrasonic waves, burrs formed on a molded product made of, for example, a hard resin or metal.

### Background Art

Hitherto, there has been known a technology of deburring for removal of foil burrs from a molded product which is obtained through simultaneous decoration molding. According to the known technology, the deburring is performed in the following manner. A molded product is immersed in a deburring water tank. The amount of dissolved oxygen in washing water (amount of air dissolved in washing water, which is referred to as "amount of dissolved oxygen" for convenience of measurement) is set to 1.5 mg/litter or less, and the temperature of the washing water is set to from 30°C to 55°C. Then, radiation of ultrasonic waves follows.

Meanwhile, there has also been known a technology of deburring in which, when ultrasonic deburring is performed with degasification of an ultrasonic washing water, a water surface shutter member covers a water surface of the washing water to prevent gas in the atmosphere from being dissolved in the washing water (for example, see Patent Literature 2).

### Citation List

### Patent Literature

[PTL 1] JP 2007-98817 A
[PTL 2] JP 2010-69690 A

### Summary of Invention

### Technical Problem

Incidentally, the applicant of the present invention has found the following. That is, during deburring through use of ultrasonic waves, even though the appropriate temperature of the washing water is from about 30°C to about 55°C for removal of foil burrs from the molded product which is obtained through simultaneous decoration molding, such a water temperature is not enough to enhance an impact force of cavitation to remove burrs more effectively from the molded product made of, for example, a hard resin or metal.

Further, the applicant of the present invention has also found that there is a limit in maintaining a degree of degasification in the washing water by merely covering the water surface with the water surface shutter member.

In view of the above-mentioned circumstances, it is an object of the present invention to remove burrs effectively by further enhancing an impact force of cavitation generated by ultrasonic waves during deburring of the molded product through radiation of ultrasonic waves in the deburring washing water.

### Solution to Problem

In order to achieve the above-mentioned object, according to the present invention, provided is an ultrasonic deburring device, which is configured to remove burrs by immersing a molded product having burrs in deburring washing water and radiating ultrasonic waves to the deburring washing water, the ultrasonic deburring device comprising: a washing water storage tank configured to store the deburring washing water to a height of 1.25λ mm when a wavelength of an ultrasonic wave to be radiated is set to λ mm; ultrasonic wave radiating means, which is arranged on a bottom surface side of the washing water storage tank and capable of radiating ultrasonic waves, which have a frequency range of from 18 KHz to 28 KHz and a power density of 2 W/cm² or higher, to the deburring washing water; oscillating means configured to allow the molded product immersed in the deburring washing water to vertically move with a stroke of at least 1/2λ mm in a vertical direction; degasifying means configured to degasify the deburring washing water to have an amount of dissolved oxygen of 1 mg/litter or less; water cooling means configured to cool the deburring washing water and maintain a temperature of the deburring washing water from 4°C to 8°C; and shielding means arranged in the washing water storage tank and configured to allow the deburring washing water to flow on a water surface of the deburring washing water to prevent dissolved oxygen in the deburring washing water in the storage tank from being increased.

At this time, it is preferred that ultrasonic wave radiating means have a frequency range of from 24 KHz to 28 KHz, or from 18 KHz to 22 KHz.

Here, the deburring washing water is set to have the amount of dissolved oxygen of 1 mg/litter or less and the water temperature of from 4°C to 8°C, and the power density of ultrasonic wave radiating means is set to 2 W/cm² or higher. With this, an impact force of cavitation can be strongly enhanced, and hence a deburring effect is enhanced. However, when such a strong impact force of cavitation is generated, ultrasonic diaphragms, walls of a storage tank, and the like are liable to be damaged. In view of this, a height of the washing water is set to 1.25λ mm. With this, an amplitude of an ultrasonic wave on a water surface is minimized, thereby being capable of preventing a risk of damaging the ultrasonic diaphragms, the walls of the storage tank, and the like. The water temperature is suitably set to about 4°C. However, when the water temperature is set lower than 4 °C, the temperature of a heat exchanger configured to cool the water needs to be set to minus several degrees or lower. Accordingly, there may be a risk in that a water circulation path in the heat exchanger is frozen. Thus, the water temperature is set to 4°C or higher. When the temperature exceeds 8°C, the impact force is weakened. Thus, the temperature range of from 4°C to 8°C is set.

Further, at a location with a maximum amplitude of the ultrasonic wave, the impact force is strong. Thus, the deburring effect is enhanced. Therefore, an entire part of the molded product is caused to pass through the location with the maximum amplitude of the wave through vertical movement of the molded product with a stroke of at least 1/2λ mm during radiation of ultrasonic waves to the washing water.

Further, when shielding means configured to allow the washing water to flow on the surface of the washing water is used to prevent entry of the air into the washing water through the water surface and resulting increase in the amount of dissolved oxygen, increase in the amount of dissolved oxygen in the washing water in the storage tankcanbepreventedeffectively. With this, reduction of the impact force of cavitation can be prevented.

### Advantageous Effects of Invention

When burrs are to be removed from the molded product through use of ultrasonic waves, the washing water is set to have the amount of dissolved oxygen to a predetermined value or less and the water temperature maintained within a predetermined range, and the power density of ultrasonic waves is set to a predetermined value or higher. Accordingly, cavitation having a significantly strong impact force is generated. Further, in this state, a deburring effect can remarkably be enhanced through vertical movement of the molded product with a predetermined stroke in the washing water.

Further, the height of the water surface is set to a predetermined value, and hence damage of the ultrasonic diaphragms, the storage tank, and the like can be prevented.

### Brief Description of Drawings

FIG. 1 is an overall view for illustrating a schematic configuration of an ultrasonic deburring device according to the present invention.
FIG. 2 is an explanatory view for illustrating a storage tank part in an enlarged manner.
FIG. 3 is an explanatory view of oscillating means taken along the line A-A of FIG. 2.

### Description of Embodiments

An ultrasonic deburring system according to the present invention is constructed as a device which is capable of removing burrs effectively through enhancement of an impact force of cavitation generated by ultrasonic waves when the ultrasonic deburring device radiates ultrasonic waves in deburring washing water to remove burrs fromamoldedproduct. The ultrasonic deburring device is characterized in reducing an amount of dissolved oxygen in the washing water, and effectively preventing entry of oxygen into the washing water and resulting increase in the amount of dissolved oxygen during cleaning. In addition, the ultrasonic deburring device is characterized in generating strong cavitation through cooling of the washing water to a predetermined temperature to remove burrs.

Herein, a method of deburring through use of ultrasonic waves includes immersing the molded product in the burring washing water, generating cavitation of a spherical nebula type (micro vacuum core group) in the washing water through radiation of ultrasonic waves in the washing water, and removing burrs through repeated application of positive and negative impact forces generated during generation and vanishment of cavitation. The method of deburring is characterized in being applicable to deburring for the molded products made of various materials, such as a metal-molded product, a hard resin-molded product, and a composite material-molded product.

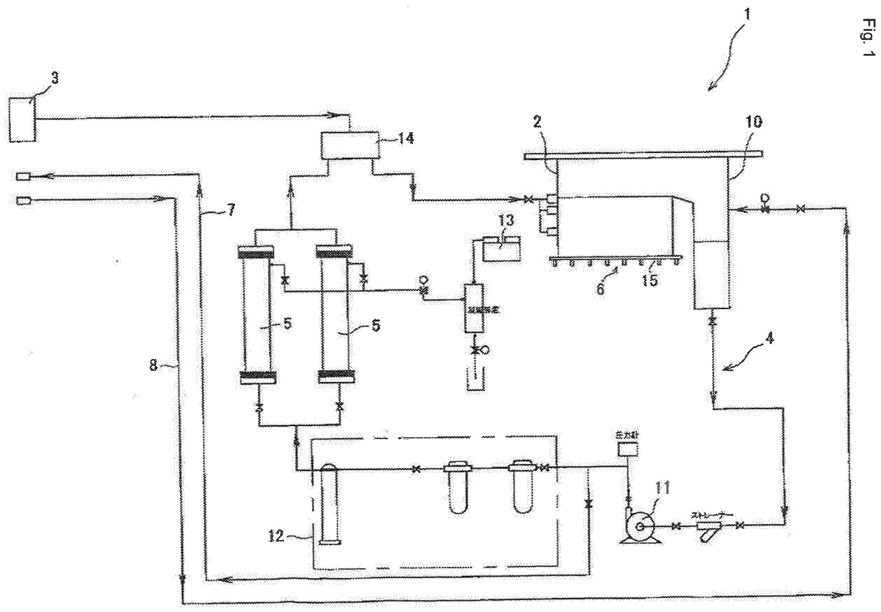

As illustrated in FIG. 1, an ultrasonic deburring device 1 includes a washing water storage tank 2 configured to store the deburring washing water, a water cooler 3 serving as a part of water cooling means configured to cool the washing water supplied to the storage tank 2, a circulation path 4 configured to allow the washing water in the storage tank 2 to circulate, vacuum hollow fiber modules 5 serving as degasifying means arranged in midway of the circulation path 4 and configured to degasify the washing water to remove dissolved oxygen, ultrasonic wave radiatingmeans 6 arranged on a bottom surface side of the storage tank 2. After the molded product is immersed in the washing water in the storage tank 2, ultrasonic waves are radiated by ultrasonic wave radiating means 6 to perform deburring.

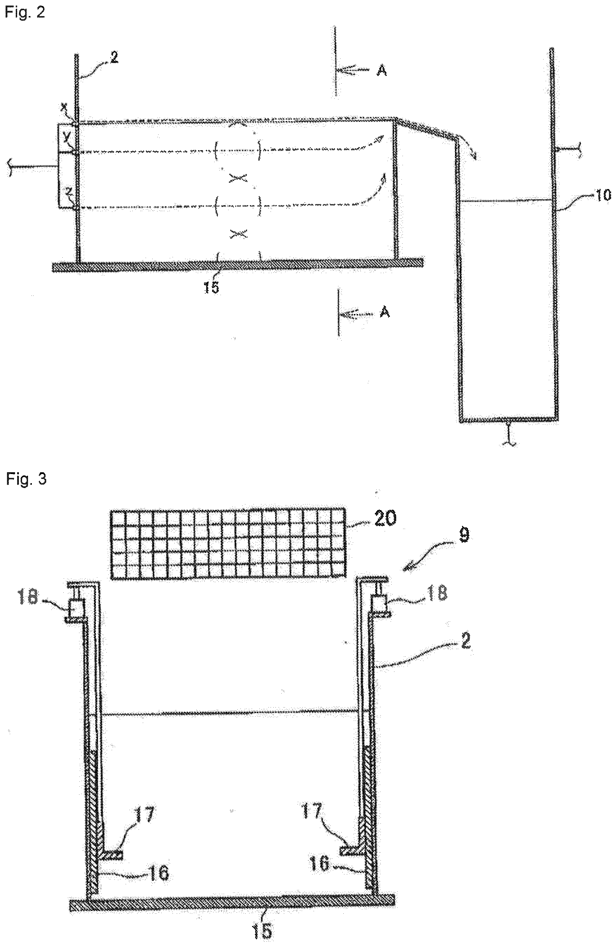

Further, in the ultrasonic deburring device 1, there are provided a water discharge path 7 configured to discharge unclean washing water circulating through the circulation path 4, and a water supply path 8 configured to supply new washing water. Further, in the storage tank 2, there is provided oscillating means 9 configured to allow the molded product to vertically move with a predetermined stroke (see FIG. 3). Oscillating means 9 is described later.

In the circulation path 4, there are provided a circulation pump 11 configured to take out the washing water from an overflow tank 10 adjacent to the storage tank 2, a filtering unit 12, and the like. Further, a vacuum pump 13 is connected to the vacuum hollow fiber modules 5. The vacuum pump 13 returns degasified washing water to the storage tank 2 through a heat exchanger 14 serving as a part of water cooling means.

The hollow fiber modules 5 have degasifying performance capable of degasifying the washing water to an amount of dissolved oxygen of 1 mg/litter or less.

Ultrasonic wave radiating means 6 includes ultrasonic diaphragms 15. The ultrasonic diaphragms 15 are capable of radiating ultrasonic waves, which have a frequency range of from 18 KHz to 28 KHz and power density of 2 W/cm² or higher, when the ultrasonic diaphragms 15 are connected to an ultrasonic diaphragm. The ultrasonic diaphragms 15 are configured to radiate ultrasonic waves upward from a bottom surface of the storage tank 2 to the washing water in the storage tank 2.

Further, in this embodiment, ultrasonic wave radiating means 6 includes two types of ultrasonic diaphragms . One of the ultrasonic diaphragms has a frequency range of from 18 KHz to 22 KHz, and another of the ultrasonic diaphragms has a frequency range of from 24 KHz to 28 KHz.

Further, the water cooler 3 is configured to cool the washing water to a temperature of around 4°C to supply the washing water to the storage tank 2 through the heat exchanger 14.

Next, a configuration of the storage tank 2 is described with reference to FIG. 2.

As described above, the overflow tank 10 is arranged adjacent to the storage tank 2. A height of the storage tank 2 is set to 1.25λ mm when a wavelength of a wave of a frequency (dashed line in FIG. 2) radiated from the above-mentioned ultrasonic diaphragms 15 is set to λ mm. As illustrated in FIG. 2, the height is set so that an amplitude of the wave of the wave radiated from the ultrasonic diaphragms 15 on the bottom surface is minimized on a surface of the washing water. Such a height is set to enable prevention of a failure such as damage of the diaphragms 15 or the storage tank 2.

On the contrary, when the water surface is at a height at which the amplitude of the wave of the ultrasonic wave is large, an impact force against the diaphragms 15, walls of the storage tank 2, and the like is large. Accordingly, the diaphragms 15, the walls of the storage tank 2, and the like are liable to be damaged.

Here, the height of the storage tank 2 is specifically described based on a relationship with the wavelength λ. For example, in a case of a frequency range of from 18 KHz to 22 KHz, a frequency of 20 KHz is exemplified. In such a case, a wavelength λ is 75 mm, and hence a height of the storage tank is 93.75 mm. In a case of a frequency range of from 24 KHz to 28 KHz, a frequency of 25 KHz is exemplified. In such a case, a wavelength λ is 60 mm, and hence a height of the storage tank is 75 mm.

Further, when the height of the storage tank 2 is set to the above-mentioned values, the washing water flows into the overflow tank 10 in a case where the washing water is supplied to an extent of exceeding the above-mentioned values. Therefore, damage of the diaphragms 15 and the like can be prevented.

Further, in the storage tank 2, there is provided a part of water cooling means, which is capable of maintaining the temperature of the washing water in the storage tank 2 from 4°C to 8°C. Water cooling means is constructed through positioning of slit holes y and z at certain positions. That is, when the washing water circulating through the circulation path 4 is supplied to the storage tank 2 again through the heat exchanger 14, cooled water is supplied through the slit holes y and z at a height with the maximum amplitude of the wave of the ultrasonic wave in the storage tank 2. Accordingly, the temperature in an entire region of the washing water in the storage tank 2 can be uniformly maintained from 4°C to 8°C.

This is because the temperature of the washing water tends to be higher through rupture of cavitation at a location with the maximum amplitude of the wave of the ultrasonic wave. Thus, the cooled water supplied through the slit holes y and z effectively cools such a location, thereby being effective in maintaining the temperature in the entire region in the storage tank 2 from 4°C to 8°C.

Further, in this state, the cooled water is simultaneously supplied through a slit hole x, which is substantially at the same height as that of the surface of the washing water. The washing water supplied through the slit hole x flows on the water surface to the overflow tank 10. Thus, the washing water, which is directly exposed to the atmosphere and increased in amount of dissolved oxygen, directly flows into the overflow tank 10. Therefore, the washing water supplied through the slit hole x offers an effect of shielding means configured to prevent increase in amount of dissolved oxygen in the washing water in the storage tank 2.

The slit holes x, y, and z are elongated holes, which are long in a direction of the storage tank 2 illustrated in FIG. 2 perpendicular to the drawing sheet and are capable of supplying the washing water to the entire region in the tank 2.

Further, the washing water supplied through the slit holes x, y, and z flows in layers. When the washing water flows to a periphery of an opposed wall, the washing water flows to be drawn in an uppermost layer of an overflow.

At predetermined positions in the storage tank 2 and the overflow tank 10, there are provided thermocouples so that the temperature of the washing water in the storage tank 2 and the overflow tank 10 can be measured.

Meanwhile, at such a location with the maximum amplitude of the wave of the ultrasonic wave, an impact force in the washing water is strong, and a deburring effect is also enhanced.

Thus, according to the present invention, there is provided oscillating means 9, which causes the molded product immersed in the washing water in the storage tank 2 to vertically reciprocate with a predetermined stroke, to thereby enable the entire part of the molded product to pass through the location having the maximum amplitude. Now, oscillating means 9 is described with reference to FIG. 3.

Oscillating means 9 includes slide guides 16 arranged on both side walls in the storage tank 2 along the vertical direction, slide tables 17 which are vertically slidable along the slide guides 16, and driving portions 18 configured to drive the slide tables 17. The driving portions 18 are driven to allow the slide tables 17 to vertically move with a stroke of at least a wavelength of 1/2λ mm.

In this embodiment, the stroke amount is set to (1/2λ+10) mm.

Further, when the molded product is immersed in the washing water, the molded product is placed in a mesh basket 20 as illustrated in FIG. 3. The basket 20 is immersed in the washing water, and a lower surface of the basket 20 is supported on the slide tables 17.

Operations and the like of the above-mentioned ultrasonic deburring device are described.

The molded product is immersed in the washing water in the storage tank 2. In this state, the molded product is placed in the basket 20. Then, the molded product is immersed together with the basket 20, and set on the slide tables 17.

Meanwhile, the washing water in the storage tank 2 is degas if ied to have the amount of dissolved oxygen of 1 mg/litter or less, and the water temperature is maintained from 4°C to 8°C.

When the molded product is immersed in the washing water, ultrasonic wave radiating means 6 radiates ultrasonic waves, which have a frequency range of from 18 KHz to 28 KHz and power density of 2 W/cm² or higher, and oscillating means 9 allows the slide tables 17 to reciprocally move in the vertical direction with a stroke of (1/2λ+10) mm.

Then, a number of cavitation are repeatedly generated and vanished in the washing water . Through an impact force generated by the cavitation, burrs are removed from the molded product. An impact force becomes stronger due to the amount of dissolved oxygen in the washing water or the water temperature. Further, the molded product passes through the location with the maximum amplitude of the frequency of the ultrasonic wave through a vertical movement of thebasket20. Thus, a deburring effect is significantly enhanced.

Further, during this time, the washing water in the storage tank 2 circulates through the circulation path 4. During circulation, the amount of dissolved oxygen of 1 mg/litter or less is maintained by the hollow fiber modules 5, and the water temperature is maintained from 4°C to 8°C by the heat exchanger 14. Then, the washing water is returned to the storage tank 2 again.

Moreover, the washing water supplied through the slit hole x flows on the water surface to flow into the overflow tank 10. Accordingly, the amount of dissolved oxygen in the washing water in the storage tank 2 is prevented from being increased. Thus, reduction in impact force of cavitation due to the increase in dissolved oxygen is prevented. Further, the washing water supplied through the slit holes y and z prevents rise in the water temperature. Therefore, an impact force of cavitation is maintained effectively.

Meanwhile, even with such a strong impact force, a failure such as damage of the diaphragms 15, the walls of the storage tank 2, and the like can be prevented because the water surface is at a position with the minimized amplitude of the frequency of the ultrasonic wave.

Incidentally, data shown below were obtained by measuring changes in sound pressure of ultrasonic waves at different temperatures (strength of an impact force is proportional to sound pressure) with piezoelectric elements.

The storage tank (width of 660 mm, depth of 480 mm) was divided into nine sections . The pressure sound data were obtained from each section during continuous oscillation under the following conditions including the amount of dissolved oxygen of 1 mg/litter or less, a frequency of 25 KHz, power density of 2 W/cm², and water temperatures of 10.4°C, 9.2°C, 6.2°C, 5.0°C.

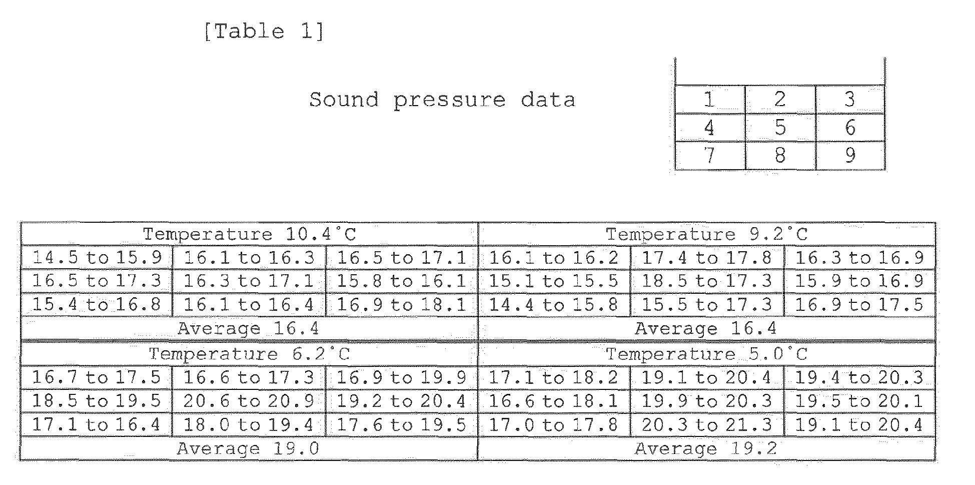

Further, data shown below are measurement results of lengths of remained burrs when deburring of the molded valve bodies was performed at a water temperature of 9.6°C and at a water temperature of 5.2°C.

**[Table 2]**

| Measured Values of Burrs of Valve Bodies (Average of Ten Samples) | |
|---|---|
| Temperature 9.6°C | Temperature 5.2°C |
| 50.7 µm | 37.3 µm |

As a result, it has been verified that, as a water temperature becomes lower, an impact force becomes stronger, and a deburring effect is more enhanced.

Thus, with the present invention, burrs which are difficult to be removed with the related art can be removed.

The present invention is not limited to the above-mentioned embodiment. Matters which have substantially the same configurations as those described in claims of the present invention and achieve the same actions and effects belong to the technical scope of the present invention.

### Industrial Applicability

The ultrasonic deburring device highly enhances an impact force of cavitation, and is capable of removing burrs which are difficult to be removed with the related-art. Thus, the ultrasonic deburring device is expected to be widely used in the future.

### Reference Signs List

1 ··· ultrasonic deburring device, 2 ··· storage tank, 3 ··· water cooler, 5 ··· vacuum hollow fiber module, 6 ··· ultrasonic wave radiating means, 9 ··· oscillating means

## Claims

1. An ultrasonic deburring device (1), which is configured to remove burrs by immersing a molded product having burrs in deburring washing water and radiating ultrasonic waves to the deburring washing water, the ultrasonic deburring device (1) comprising:
a washing water storage tank (2) configured to store the deburring washing water to a height of 1.25λ mm when a wavelength of an ultrasonic wave to be radiated is set to λ mm;
ultrasonic wave radiating means (6), which is arranged on a bottom surface side of the washing water storage tank (2) and capable of radiating ultrasonic waves, which have a frequency range of from 18 KHz to 28 KHz and power density of 2 W/cm² or higher, to the deburring washing water;
oscillating means (9) configured to allow the molded product immersed in the deburring washing water to vertically move with a stroke of at least 1/2 λ mm in a vertical direction;
degasifying means configured to degasify the deburring washing water to have an amount of dissolved oxygen of 1 mg/litter or less;
water cooling means (3) configured to cool the deburring washing water and maintain a temperature of the deburring washing water from 4°C to 8°C; and
shielding means arranged in the washing water storage tank (2) and configured to allow the deburring washing water to flow on a water surface of the deburring washing water to prevent dissolved oxygen in the deburring washing water in the storage tank (2) from being increased.

2. An ultrasonic deburring device (1) according to claim 1, wherein the ultrasonic wave radiating means (6) has a frequency range of from 24 KHz to 28 KHz.

3. An ultrasonic deburring device (1) according to claim 1, wherein the ultrasonic wave radiating means (6) has a frequency range of from 18 KHz to 22 KHz.

## Patentansprüche

1. Ultraschall-Entgratungsvorrichtung (1), die so konfiguriert ist, dass sie Grate durch Eintauchen eines gegossenen Produkts mit Graten in ein Entgratungswaschwasser und Aussenden von Ultraschallwellen auf das Entgratungswaschwasser entfernt, wobei die Ultraschall-Entgratungsvorrichtung (1) aufweist:
einen Waschwasserspeichertank (2), der so konfiguriert ist, dass er das Entgratungswaschwasser bis zu einer Höhe von 1,25λ mm speichert, wenn eine Wellenlänge einer Ultraschallwelle, die ausgesendet werden soll, auf λ mm eingestellt ist;
eine Ultraschallwellenaussendeeinrichtung (6), die auf einer Bodenoberflächenseite des Waschwasserspeichertanks (2) angeordnet ist und in der Lage ist, Ultraschallwellen auf das Entgratungswaschwasser auszustrahlen, die einen Frequenzbereich von 18 KHz bis 28 KHz und eine Leistungsdichte von 2 W/cm² oder mehr aufweisen;
eine Oszillationseinrichtung (9), die so konfiguriert ist, dass sie es dem gegossenen Produkt, das in das Entgratungswaschwasser eingetaucht ist, ermöglicht, sich mit einem Hub von mindestens 1/2 λ mm in einer vertikalen Richtung vertikal zu bewegen;
eine Entgasungseinrichtung, die so konfiguriert ist, dass sie das Entgratungswaschwasser entgast, so dass es eine Menge an gelöstem Sauerstoff von 1 mg/Liter oder weniger aufweist;
eine Wasserkühleinrichtung (3), die so konfiguriert ist, dass sie das Entgratungswaschwasser kühlt und eine Temperatur des Entgratungswaschwassers in einem Bereich von 4 °C bis 8 °C hält;
eine Abschirmeinrichtung, die in dem Waschwasserspeichertank (2) angeordnet und so konfiguriert ist, dass sie es dem Entgratungswaschwasser ermöglicht, auf einer Wasseroberfläche des Entgratungswaschwassers zu fließen, um zu verhindern, dass sich die Menge an gelöstem Sauerstoff in dem Entgratungswaschwasser in dem Speichertank (2) erhöht.

2. Ultraschall-Entgratungsvorrichtung (1) nach Anspruch 1, wobei die Ultraschallwellenaussendeeinrichtung (6) einen Frequenzbereich von 24 KHz bis 28 KHz aufweist.

3. Ultraschall-Entgratungseinrichtung (1) nach Anspruch 1, wobei die Ultraschallwellenaussendeeinrichtung (6) einen Frequenzbereich von 18 KHz bis 22 KHz aufweist.

## Revendications

1. Dispositif d'ébavurage par ultrasons (1) configuré pour enlever les bavures par immersion d'un produit moulé ayant des bavures, dans de l'eau de lavage d'ébavurage et émission des ondes d'ultrasons dans l'eau de lavage d'ébavurage,
le dispositif d'ébavurage par ultrasons (1) comprenant :
- un réservoir d'eau de lavage (2) configuré pour contenir l'eau de lavage d'ébavurage sur une hauteur de 1,25 À mm si la longueur d'ondes des ultrasons émis est égale à λ mm,
- un moyen d'émission des ondes d'ultrasons (6) placé sur la surface côté fond du réservoir d'eau de lavage (2) et permettant d'émettre des ondes d'ultrasons dans une plage de fréquences entre 18 KHz et 28 KHz avec une densité de puissance de 2 W/cm² ou plus, dans l'eau de lavage d'ébavurage,
- un moyen oscillant (9) configuré pour permettre au produit moulé immergé dans l'eau de lavage d'ébavurage, de se déplacer verticalement avec une course d'au moins 1/2 λ mm dans la direction verticale,
- un moyen de dégazification pour dégazifier l'eau de lavage d'ébavurage pour que sa teneur en oxygène dissout soit de 1 mg/litre ou moins,
- un moyen de refroidissement de l'eau (3) configuré pour refroidir l'eau de lavage d'ébavurage et maintenir une température de l'eau de lavage d'ébavurage entre 4°C et 8°C, et
- un écran placé dans le réservoir d'eau de lavage (2) et configuré pour permettre à l'eau de lavage d'ébavurage de couler sur une surface d'eau de lavage d'ébavurage pour éviter l'augmentation de l'oxygène dissout dans l'eau de lavage d'ébavurage dans le réservoir d'eau (2).

2. Dispositif d'ébavurage par ultrasons (1) selon la revendication 1,
dans lequel
le moyen émetteur d'ultrasons (6) a une plage de fréquences comprise entre 24 KHz et 28 KHz.

3. Dispositif d'ébavurage par ultrasons (1) selon la revendication 1,
dans lequel
le moyen d'émission des ondes d'ultrasons (6) a une plage de fréquences comprise entre 18 KHz et 22 KHz.
